# DEMANDE DE BREVET EUROPEEN

(11) **EP 4 113 676 A1**
(43) Date de publication de la demande: **04.01.2023**
(21) Numéro de dépôt: 22181820.6
(22) Date de dépôt: 29.06.2022
(51) Int. Cl.: H01M 8/043, H01M 8/04223, H01M 8/04791, H01M 8/04858, H01M 8/04746, H01M 8/10

(54) **PROCÉDÉ D'ACTIVATION D'UNE PILE À COMBUSTIBLE**

(30) Priorité: 30.06.2021 FR 2107071
(71) Demandeur: Commissariat à l'énergie atomique et aux énergies alternatives, 75015 Paris (FR)
(72) Inventeur: MICOUD, Fabrice, 38059 GRENOBLE Cedex 09 (FR); MORIN, Arnaud, 38059 GRENOBLE Cedex 09 (FR); POIROT-CROUVEZIER, Jean-Philippe, 38059 GRENOBLE Cedex 09 (FR); VANDENBERGHE, Florent, 38059 GRENOBLE Cedex 09 (FR)
(74) Mandataire: Hautier IP

(57) **Abrégé**

L'invention porte sur un procédé d'activation d'une pile à combustible (100) comprenant une pluralité de cellules électrochimiques en empilement,
ladite pile à combustible (100) étant destinée à être alimentée, lors d'une phase de fonctionnement nominale, par un fluide d'alimentation présentant un débit nominal et une fraction molaire de comburant nominale,
ledit procédé comprenant, lors d'une phase d'activation préalable à la phase de fonctionnement nominale :
- Une alimentation de la pile à combustible par un fluide d'activation présentant un débit supérieur ou égal à 80% du débit nominal, et une fraction molaire de comburant inférieure ou égale à 50% de la fraction molaire nominale de comburant,
- Une application d'une tension d'activation Ve aux cellules de la pile à combustible (100), Ve étant inférieure ou égale à 0,3 V,

ladite phase d'activation présentant une durée comprise entre 2 minutes et 30 minutes.

## Description

### DOMAINE TECHNIQUE

La présente invention concerne le domaine des piles à combustibles, en particulier les piles à combustible à membrane échangeuse de protons (ou PEMFC pour Proton Exchange Membrane Fuel Cell). Elle peut être mise en œuvre pour conditionner ou activer une PEFMC, et optimiser les performances de celle-ci.

### ETAT DE LA TECHNIQUE

Une pile à combustible est formée d'un empilement de cellules électrochimiques « unitaires », comportant chacune une anode et une cathode séparées électriquement l'une de l'autre par un électrolyte. Dans le cas d'une pile à hydrogène, le combustible (l'hydrogène) est apporté au contact de l'anode, et le comburant (l'oxygène) est amené au contact de la cathode. Des réactions d'oxydation et de réduction ont respectivement lieu au niveau de l'anode et de la cathode, ce qui produit de l'électricité, de l'eau et de la chaleur. L'électrolyte peut se présenter sous forme d'une membrane laissant passer les protons issus de la réaction d'oxydation de l'hydrogène. C'est le cas des piles à combustible à membrane échangeuse de protons (PEMFC).

Lors de la mise en œuvre de la PEMFC, une phase de conditionnement initiale est généralement effectuée. Cette phase de conditionnement permet à la PEMFC d'atteindre ses performances nominales.

Cette toute première phase de fonctionnement de la PEMFC s'effectue de manière générale dans des conditions favorables en termes d'humidité et de température afin d'hydrater correctement la membrane et « d'activer » les couches catalytiques pour augmenter progressivement les performances initiales de la pile et atteindre ses performances nominales.

Les phénomènes intervenant lors de cette phase de conditionnement, encore appelée phase d'« activation », demeurent assez mal compris à ce jour et peuvent comprendre à la fois l'hydratation du ionomère dans les couches actives des cellules, et/ou la dépollution du catalyseur et des couches actives dans leur ensemble.

En tout état de cause, la phase de conditionnement ou d'activation produit une amélioration des performances de la PEMFC et est donc un requis préalable au fonctionnement nominal de la pile. La phase de conditionnement ou d'activation peut également présenter un intérêt pour des réactivations ultérieures des capacités de la PEFMC, autres qu'en conditionnement initial. Cette phase peut ainsi être également dénommée phase de régénération.

Un procédé de conditionnement ou d'activation standard dure généralement entre 4 et 8 heures, ce qui constitue un coût et une contrainte matérielle non négligeables en vue d'une industrialisation des systèmes PEMFC.

Un enjeu lié à l'activation des piles préalablement à leur mise en œuvre est de réduire la durée du procédé d'activation.

Parmi les différents procédés d'activation connus, le document US8012636B2 divulgue une méthode d'activation accélérée d'une PEFMC. Cette méthode est basée sur un fonctionnement en court-circuit périodique de la pile. Les débits des gaz réactifs sont ajustés de façon à limiter un dégagement de chaleur lors des phases de court-circuit. Ce document indique que la durée typique de cette méthode d'activation est de 30 minutes.

Cette méthode alterne des phases de fonctionnement extrême de la pile - en court-circuit - et des phases de relaxation - en conditions de fonctionnement standard. Les phases de fonctionnement extrême entraînent un fort dégagement de chaleur et peuvent générer des dégradations au sein de la pile. Il est donc nécessaire d'avoir une excellente gestion thermique.

Une autre méthode d'activation d'une pile est divulguée par le document JP6722122 B2. Cette méthode présente cependant une efficacité limitée pour activer une pile comprenant un ensemble de cellules unitaires.

Le document US20170338499 A1 divulgue un procédé d'activation où l'air alimentant la pile est appauvri en oxygène et la tension de fonctionnement des cellules est diminuée jusqu'à 0,1 V.

Dans tous les cas, il existe un besoin consistant à améliorer les procédures d'activation actuelles, notamment en diminuant encore la durée d'activation de la pile.

Un objet de la présente invention est donc de proposer un procédé d'activation d'une pile à combustible répondant à ce besoin, et palliant certains au moins des inconvénients des procédés connus.

En particulier, un objet de la présente invention est de proposer un procédé d'activation d'une pile à combustible, présentant une durée diminuée.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un procédé d'activation d'une pile à combustible comprenant une pluralité de cellules électrochimiques en empilement, ladite pile à combustible étant destinée à être alimentée, lors d'une phase de fonctionnement nominale, par un fluide d'alimentation présentant un débit nominal et une fraction molaire de comburant nominale.

Le procédé d'activation comprend, lors d'une phase d'activation préalable à la phase de fonctionnement nominale :
- Une alimentation de la cathode de la pile à combustible par un fluide d'activation présentant un débit supérieur ou égal à 80% du débit nominal, et une fraction molaire de comburant inférieure ou égale à 50% de la fraction molaire nominale de comburant,
- De préférence, une alimentation de l'anode par un deuxième fluide d'activation présentant un débit d'hydrogène supérieur à la quantité consommée par la réaction pendant la phase d'activation,
- Une application d'une tension d'activation Ve à chaque cellule de la pile à combustible, Ve étant inférieure ou égale à 0,3 V,

Avantageusement, la phase d'activation présente une durée comprise entre 2 secondes et 30 minutes.

Le procédé d'activation permet ainsi d'activer rapidement la pile en appauvrissant la fraction molaire de comburant du fluide alimentant la pile lors de la phase d'activation et en maintenant une tension d'activation Ve ≤ 0,3 V.

Lors du développement de la présente invention, il a été constaté que l'application d'une tension d'activation Ve ≤ 0,3 V sous atmosphère appauvrie en comburant permet de réduire efficacement les oxydes superficiels formés au niveau des cathodes des cellules. C'est en particulier le cas pour les oxydes Pt-Ox se formant sur le catalyseur à base de platine des cathodes. Les oxydes « Pt-Ox » sont ainsi éliminés en abaissant le potentiel de la cathode suffisamment bas, c'est-à-dire en-dessous de 0,3 V, pendant suffisamment longtemps, c'est-à-dire au moins 2 min. Il est apparu qu'une tension classiquement utilisée de 0,5 V, très éloignée de la valeur de 0,3 V retenue ici, ne permet pas d'éliminer les oxydes « Pt-Ox », ou de façon très partielle et inefficace.

Un préjugé technique consiste à considérer que la valeur de 0,3 V est une limite basse à ne pas franchir lors du fonctionnement d'une pile. Cette valeur limite est notamment utilisée dans le contrôle-commande sur les bancs de test de pile, et sur les systèmes embarqués comprenant une telle pile. Son franchissement engendre ainsi habituellement une procédure d'arrêt du système.

Au contraire, un principe de la présente invention consiste à se placer à une valeur de tension inférieure ou égale, et de préférence strictement inférieure, à cette valeur limite de 0,3 V, pour bénéficier d'un mécanisme de réduction efficace des oxydes Pt-Ox lors de la phase de conditionnement ou d'activation.

Le procédé d'activation selon la présente invention permet ainsi de dépolluer le catalyseur Pt de manière particulièrement efficace. Les sites actifs « Pt métallique» deviennent rapidement accessibles. L'activation du catalyseur Pt est plus efficace et plus rapide.

Selon un mode de réalisation préféré, la tension d'activation Ve est inférieure ou égale à 0,2 V, et de préférence de l'ordre de 0,1 V. De telles tensions d'activation favorisent la production d'eau lors des réactions d'oxydo-réductions. L'électrolyte polymère de la pile est ainsi mieux hydratées. L'application prolongée d'un potentiel voisin de 0,1 V à la cathode de la pile pourrait également permettre de désorber d'autres polluants éventuels provenant de la synthèse du catalyseur (i.e. chlorures) et/ou du procédé de fabrication de la membrane (i.e. molécules organiques).

Le fluide d'activation appauvri en comburant, par rapport à la fraction molaire de comburant nominale, permet par ailleurs d'éviter un échauffement préjudiciable à la pile. Lorsque la quantité de comburant diminue, le courant de fonctionnement diminue et le dégagement de chaleur lié au courant de fonctionnement est limité. Il n'est plus nécessaire d'effectuer des phases de « relaxation » comme dans le procédé divulgué dans le document US8012636B2. La durée totale du procédé d'activation peut être avantageusement diminuée. Le procédé d'activation est en outre plus sûr. Le risque de dégrader la pile est diminué.

Le maintien d'un débit de fluide d'activation suffisamment élevé, typiquement supérieur ou égal à 80% du débit nominal, permet en outre :
- de transporter le comburant de façon plus homogène au travers de la pile,
- de mieux répartir l'eau produite lors des réactions d'oxydo-réductions, et dans une moindre mesure,
- d'évacuer plus efficacement la chaleur produite,

La combinaison des paramètres de fraction molaire de comburant et de débit du fluide d'activation, et de tension d'activation, permet d'augmenter très significativement l'efficacité d'activation de la pile. La durée nécessaire pour activer la pile est significativement réduite.

Ainsi, ce procédé d'activation présente des performances considérablement améliorées par rapport aux solutions connues. Le procédé proposé permet en particulier de conditionner la pile à combustible de manière particulièrement efficace avant tout fonctionnement nominal de cette pile à combustible. Par ailleurs, ce procédé peut également permettre de régénérer la pile à combustible après une ou plusieurs phases de fonctionnement nominal. Plus précisément, ce procédé permet de régénérer ou de réactiver l'AME (assemblage membrane-électrode) de la pile à combustible.

Ainsi, le procédé proposé peut être mis en œuvre soit pour conditionner, soit pour régénérer une pile à combustible.

Le procédé d'activation selon la présente invention peut être avantageusement mis en oeuvre par un système de recirculation fluidique dans la pile. Un tel système de recirculation fluidique permet typiquement de réinjecter le fluide d'alimentation en entrée de la pile, après que ce dernier ait traversé la pile. Le fluide réinjecté est ainsi appauvri en comburant et forme le fluide d'activation. Une pompe de recirculation sur le système de recirculation fluidique peut typiquement permettre de maintenir un débit suffisant de fluide appauvri en comburant au sein de la pile. Ce système de recirculation fluidique peut faire partie d'un équipement destiné à activer une pile à combustible et comprenant un système de contrôle-commande configuré pour contrôler et commander le système de recirculation. Un tel équipement contrôle *in fine* la formation du fluide d'activation par recirculation du fluide d'alimentation au sein de la pile. Cet équipement est typiquement configuré comme indiqué ci-dessous, selon un autre aspect de l'invention.

Selon un autre aspect, l'invention porte sur un équipement comportant une pile à combustible comprenant une pluralité de cellules électrochimiques en empilement, l'équipement comprenant un système de contrôle-commande configuré pour :
- imposer à la pile à combustible au moins une phase de fonctionnement nominale, au cours de laquelle ledit système contrôle et commande l'alimentation de la pile à combustible par un fluide d'alimentation présentant un débit nominal et une fraction molaire de comburant nominale,
- imposer à la pile à combustible une phase d'activation préalable à l'au moins une phase de fonctionnement nominale, au cours de laquelle le système de contrôle-commande contrôle et commande :
   ∘ l'alimentation de la pile à combustible par un fluide d'activation présentant un débit supérieur ou égal à 80% du débit nominal, et une fraction molaire de comburant inférieure ou égale à 50% de la fraction molaire nominale de comburant,
   ∘ l'application d'une tension d'activation Ve aux cellules de la pile à combustible, Ve étant inférieure ou égale à 0,3 V.

Le système de contrôle-commande est configuré de sorte que la phase d'activation présente une durée comprise entre 2 secondes et 30 minutes.

Selon un autre aspect, l'invention porte sur une utilisation de cet équipement pour conditionner ou pour régénérer une pile à combustible, et plus précisément l'AME de la pile à combustible.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La figure 1 présente des courbes de polarisation obtenues à différents temps de conditionnement sous air appauvri à 0,1 V, selon un mode de réalisation de la présente invention.
La figure 2 présente l'évolution de la tension des cellules en fonction du temps de conditionnement, à partir des courbes de polarisation présentées à la figure 1, selon un mode de réalisation de la présente invention.
La figure 3 présente une comparaison entre une courbe de polarisation obtenue après mise en œuvre du procédé d'activation selon un mode de réalisation de la présente invention, et une courbe de polarisation obtenue après mise en œuvre d'un procédé d'activation classique selon l'art antérieur.
La figure 4 illustre schématiquement une pile comprenant un système de recirculation fluidique permettant de mettre en œuvre le procédé d'activation, selon un mode de réalisation de la présente invention.
La figure 5 illustre schématiquement une pile à deux groupes comprenant un système de recirculation fluidique permettant de mettre en œuvre le procédé d'activation, selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le débit et la fraction molaire de comburant du fluide d'activation, et la tension d'activation Ve sont choisies de sorte que la pile présente une stoechiométrie comprise entre 1,1 et 1,5 lors de la phase d'activation.
Selon un exemple, la stoechiométrie est comprise entre 1,2 et 1,3 lors de la phase d'activation. Cette valeur de stoechiométrie est très éloignée des valeurs que l'on peut rencontrer habituellement pour des procédés d'activation. Ainsi, le fonctionnement de la pile à une valeur de stoechiométrie comprise entre 1,2 et 1,3 est totalement différent d'un fonctionnement de pile à une valeur de stoechiométrie de l'ordre de 5. Les mécanismes et les principes qui sous-tendent deux procédés d'activation présentant des valeurs de stoechiométrie si éloignées sont ainsi très différents voire opposés.
Selon un exemple, la tension d'activation Ve est inférieure ou égale à 0,2 V. Cela permet d'améliorer la réduction des oxydes Pt-Ox. La durée de la phase d'activation peut être diminuée.
Selon un exemple, la tension d'activation Ve est égale à 0,1 V. Cela permet d'optimiser la réduction des oxydes Pt-Ox. Le catalyseur est dépollué plus efficacement. La phase d'activation est ainsi plus rapide.
Selon un exemple, lors de la phase de fonctionnement nominal, une tension de fonctionnement Vf ≥ 0,5 V est appliquée aux cellules de la pile à combustible. La pile peut être régulée en tension lors de la phase de fonctionnement nominal.
Selon un exemple, la tension d'activation Ve et la tension de fonctionnement Vf sont telles que Ve ≤ 0,5.Vf, et de préférence Ve ≤ 0,2.Vf.
Selon un exemple, la fraction molaire de comburant du fluide d'activation est comprise entre 5% et 8%.
Selon un exemple, la phase d'activation est appliquée simultanément à toutes les cellules de la pluralité de cellules électrochimiques de la pile.
Selon un exemple, la pluralité de cellules électrochimiques de la pile présente une surface réactive totale comprise entre 10 cm² et 800 cm², de préférence entre 10 cm² et 500 cm², et de préférence entre10 cm² et 200 cm².
Selon un exemple, le procédé d'activation est un procédé de conditionnement initial de la pile à combustible. La phase d'activation est effectuée avant toute phase de fonctionnement nominale, le procédé permettant ainsi de conditionner la pile à combustible. Dans ce cas, la durée de la phase d'activation est de préférence comprise entre 2 minutes et 30 minutes et de préférence entre 5 minutes et 15 minutes.
Selon un autre exemple, le procédé d'activation est un procédé de régénération de la pile à combustible. La phase d'activation est effectuée entre deux phases de fonctionnement nominales, le procédé permettant ainsi de régénérer la pile à combustible. Dans ce cas, la durée de la phase d'activation est de préférence comprise entre 2 secondes et 20 secondes.
Selon un exemple, le fluide d'activation est formé à partir du fluide d'alimentation en diminuant la fraction molaire de comburant dudit fluide d'alimentation, par recirculation du fluide d'alimentation au sein de la pile.
Selon un exemple, le fluide d'activation présente, lors de la phase d'activation, un sens d'écoulement dans la pile inversé par rapport à un sens d'écoulement du fluide d'alimentation lors de la phase de fonctionnement nominale. Cela permet d'améliorer le brassage entre et au sein des cellules. Cela permet d'homogénéiser la régénération de la pile ou d'une partie de la pile.
Selon un exemple, les cellules de la pile sont réparties au sein d'un ou plusieurs groupes. Si la pile comprend plusieurs groupes, ces groupes peuvent être interconnectés fluidiquement et/ou électriquement entre eux.
Selon un exemple, le circuit fluidique comprend en outre une pompe de recirculation permettant de réinjecter le fluide d'alimentation appauvri en comburant au sein de la pile. Cette pompe de recirculation est de préférence configurée pour maintenir un débit de fluide suffisant dans la pile lors de la phase d'activation, en particulier un débit de fluide supérieur ou égal à 80% d'un débit nominal mesuré dans le conduit d'alimentation principal. L'utilisation d'une pompe de recirculation pour alimenter le ou les groupes de la pile en phase d'activation permet notamment une meilleure homogénéisation fluidique entre et au sein des cellules.

Lors de la phase d'activation, la recirculation du fluide d'activation au sein de la pile permet également de diminuer la fraction molaire de comburant (oxygène) en entrée du ou des groupes de la pile et, subséquemment, d'obtenir une meilleure répartition de la densité de courant le long des cellules de chaque groupe. Cela permet ainsi d'abaisser plus facilement le potentiel des cellules à un courant donné. Cela permet *in fine* de limiter la génération de chaleur. La recirculation du fluide d'activation via les lignes de recirculation permet avantageusement de réinjecter du fluide d'activation suffisamment humide en entrée de la pile et/ou de chaque groupe de la pile. Les gradients d'humidité dans les cellules de chaque groupe sont ainsi limités. Cela permet d'hydrater les cellules lors de l'activation.

Selon un exemple, la pompe de recirculation est configurée pour permettre une inversion d'un sens d'écoulement du fluide dans les cellules lors de la phase d'activation. Cela permet d'homogénéiser la répartition en comburant et/ou en densité de courant entre et au sein des cellules.

Selon un exemple, la phase d'activation est configurée de sorte que la fraction molaire de comburant du fluide d'activation circulant au travers de la pile ou d'un ou plusieurs groupes de la pile soit inférieure ou égale à 50% de la fraction molaire nominale de comburant. Un tel appauvrissement en comburant permet d'abaisser la tension de fonctionnement des cellules lors de l'activation. Cela permet de réduire efficacement les oxydes superficiels Pt-Ox.

Selon un exemple, le fluide d'activation circulant au travers de la pile ou d'un ou plusieurs groupes de la pile présente un débit d'activation supérieur ou égal à 80% du débit nominal. Cela permet de maintenir une circulation suffisamment rapide du fluide d'activation dans les cellules, de sorte que tout le comburant ne soit pas consommé en sortie de pile en phase d'activation. Une fraction molaire de comburant non nulle peut ainsi être avantageusement obtenue à la sortie de la pile ou de chaque groupe de la pile, par exemple de l'ordre de 2% ou plus. Un débit de fluide d'activation important permet également un bon brassage du fluide entre et au sein des cellules. Une activation plus efficace, plus rapide et plus homogène est ainsi obtenue.

Selon un exemple, le système de contrôle-commande est configuré pour appauvrir la fraction molaire de comburant par recirculation du fluide d'alimentation au sein de la pile. Le fluide appauvri en comburant correspond typiquement au fluide d'activation.

Sauf incompatibilité, des caractéristiques techniques décrites en détail pour un mode de réalisation donné peuvent être combinées aux caractéristiques techniques décrites dans le contexte d'autres modes de réalisation décrits à titre exemplaire et non limitatif. En particulier, des éléments décrits ou illustrés sur les figures pour la pile ou pour le procédé peuvent être combinés de manière à former un autre mode de réalisation qui n'est pas nécessairement illustré ou décrit. Un tel mode de réalisation n'est évidemment pas exclu de l'invention. Une pile à combustible selon la présente invention comprend au moins un groupe de cellules électrochimiques. L'homme du métier n'aura aucune difficulté à mettre en oeuvre un mode de réalisation comprenant deux groupes ou plus de cellules électrochimiques.

Dans le cadre de la présente invention, on entend par « pile à combustible » un système comprenant un ou plusieurs groupes de cellules électrochimiques. Chaque groupe est ainsi constitué d'une série de cellules électrochimiques interconnectées. Les cellules se présentent typiquement sous forme d'un assemblage membrane-électrode couramment désigné AME. Le procédé d'activation s'applique ici à une pile dimensionnée pour des applications industrielles. Ainsi la pile comprend ici une pluralité de cellules électrochimiques, qui forment typiquement un empilement de membranes/électrodes. Une telle pile n'est pas assimilable à un démonstrateur de laboratoire comprenant généralement une cellule électrochimique unitaire. En particulier, la gestion thermique est beaucoup plus complexe et critique au sein d'une pile « industrielle » qu'au sein d'une cellule unitaire de laboratoire. Un procédé d'activation mis au point sur une cellule de laboratoire n'est ainsi pas directement transposable à une pile industrielle comprenant plusieurs cellules. La pile comprend ici au moins cinq cellules empilées, et de préférence au moins dix.

La pile présente typiquement différentes phases de fonctionnement, en particulier, une phase de conditionnement initial, une ou plusieurs phases de production nominales, éventuellement une ou plusieurs phases de régénération, une phase d'arrêt.

Le procédé d'activation selon la présente invention traite plus particulièrement des phases de conditionnement initial et de régénération.

La phase de conditionnement initial vise à amener les performances de la pile à un niveau de performances nominal, ou au moins à 90% du niveau de performances nominal, selon le critère de niveau d'atteinte souhaité.

Lors d'une phase de fonctionnement ou de production nominale de la pile, les cellules de la pile sont typiquement alimentées par un fluide d'alimentation présentant un débit nominal et une fraction molaire de comburant nominale. Bien que pouvant varier, ce débit nominal et/ou cette fraction molaire de comburant nominale sont parfaitement identifiables, en ce qu'ils correspondent aux conditions de fonctionnement nominal. Le fonctionnement nominal génère des performances nominales pour la pile.

Lors d'une phase de régénération de la pile, les cellules sont alimentées par un fluide d'alimentation présentant une fraction molaire de comburant réduite.

Lors d'une phase d'arrêt, la pile n'est plus alimentée par le conduit d'alimentation principal. La pile peut continuer à être alimentée temporairement et de façon dégressive par recirculation.

Dans le cadre de la présente invention, une entrée ou une sortie de la pile, ou d'un groupe au moins de la pile, présentent typiquement chacune un aspect structurel et un aspect fonctionnel. Ainsi structurellement, l'entrée et la sortie correspondent à des premier et deuxième orifices de passage pour le fluide d'alimentation. Fonctionnellement, l'entrée et la sortie désignent respectivement l'admission et l'évacuation du fluide d'alimentation / d'activation. Dans la mesure où le sens de circulation du fluide peut être inversé, l'entrée et la sortie peuvent être physiquement interverties. Ainsi, le premier orifice de passage peut former l'entrée ou la sortie, et inversement, le deuxième orifice de passage peut former la sortie ou l'entrée.

Pour faciliter la compréhension vis-à-vis de la circulation du fluide dans les cellules de la pile, nous conservons uniquement les termes entrée/sortie et leurs références correspondantes sur les dessins d'accompagnement, respectivement X1 (X= 1...2) pour l'entrée et X2 (X= 1...2) pour la sortie, indépendamment de l'orifice matériellement concerné.

Dans le cadre de la présente invention, la ligne de recirculation est configurée pour mettre en communication fluidique l'entrée et la sortie de la pile ou du groupe considéré. Cette ligne de recirculation s'étend entre l'entrée et la sortie de la pile ou du groupe considéré. Dans le cas de plusieurs groupes, chaque ligne de recirculation est propre au groupe considéré. Elle ne passe pas par un autre groupe que le groupe considéré. Elle peut emprunter des sections d'autres lignes, par exemple des lignes d'alimentation et/ou d'évacuation. Ainsi, des sections de la ligne de recirculation peuvent être communes avec des sections d'autres lignes. Des points de piquage ou des embranchements peuvent être physiquement présents le long de cette ligne de recirculation. Des organes peuvent également être présents le long de cette ligne de recirculation. Ce sont typiquement des organes de régulation tels que le commutateur de recirculation et la pompe de recirculation. Ces organes n'incluent pas d'autre groupe de cellules électrochimiques. La ligne de recirculation connecte fluidiquement l'entrée et la sortie du seul groupe auquel elle est attachée. Ainsi, l'entrée d'un groupe est en connexion fluidique avec la sortie du même groupe, via la ligne de recirculation.

Plusieurs modes de réalisation de l'invention mettant en oeuvre des étapes successives du procédé d'activation sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Dans la présente demande, on entend par « stoechiométrie », le ratio entre la quantité de réactif en entrée et la quantité consommée par la réaction électrochimique. Si la fraction molaire en sortie de cellule peut être évaluée par un simple bilan de masse, l'évolution le long des cellules en interne du groupe ou de la pile n'est généralement pas connue. Ainsi, une stoechiométrie de 2 indique que la quantité de réactif en entrée (typiquement le comburant O2) est deux fois supérieure à la quantité de réactif en sortie. Une stoechiométrie de 1,5 indique que la quantité de réactif en entrée (typiquement le comburant O2) est trois fois supérieure à la quantité de réactif en sortie. Une stoechiométrie de 1 indique que le réactif est totalement consommé lors de la réaction électrochimique. On veillera à se placer à une stoechiométrie supérieure à 1, par exemple de l'ordre de 1,2 ou 1,3, de façon à ce que tout le comburant ne soit pas consommé lors de la phase d'activation.

Dans la présente demande, une tension d'activation Ve est appliquée. Dans le cadre de cette invention, cette tension d'activation Ve correspond à la différence de potentiel entre l'anode et la cathode de la pile ou du groupe considéré. Cette tension d'activation peut donc être directement mesurée sur la pile. Les exemples de mise en œuvre du procédé s'appuient principalement, sauf mention contraire, sur une régulation en tension de la pile. Une régulation de tension permet de définir des conditions de tension compatibles avec l'activation, le fonctionnement et la régénération des cellules. Une régulation en courant n'est cependant pas exclue.

Sur les figures annexées, un sens de circulation du fluide dans le circuit fluidique est indiqué par une flèche. Les commutateurs passant ou bloquant (typiquement des vannes ouvertes ou fermées) sont illustrés. Les traits pointillés illustrent différentes fractions molaires de comburant du fluide circulant dans la ligne fluidique concernée, c'est-à-dire la ligne d'alimentation ou la ligne d'évacuation ou la ligne de recirculation.

Dans les exemples qui suivent, le fluide d'alimentation de la pile lors de la phase de fonctionnement nominale est de l'air présentant une fraction molaire nominale d'oxygène de l'ordre de 21%, et un débit nominal. Le fluide d'activation de la pile lors de la phase d'activation est de l'air appauvri en oxygène présentant une fraction molaire d'oxygène comprise entre 5% et 8%. Pour simplifier, le procédé d'activation est décrit et illustré au travers d'une pile comprenant un seul et unique groupe de cellules. Cela correspond à la majorité des architectures de piles à combustible. Il est néanmoins parfaitement envisageable de mettre en oeuvre un ou plusieurs groupes dimensionnés différemment, sans se départir du principe général d'activation explicité ci-après.

L'idée originale mise en œuvre dans le cadre du développement de la présente invention consiste notamment à abaisser la fraction molaire d'oxygène, typiquement entre 5% et 8%, du fluide alimentant le circuit cathodique de la pile en maintenant un débit total sensiblement constant lors de la phase d'activation. Cela permet de limiter le courant maximum de fonctionnement dans la pile tout en travaillant à basse tension, de manière contrôlée et stabilisée.

Il a notamment été observé que l'application d'une tension d'activation Ve peu élevée des cellules de la pile, typiquement de l'ordre de 0,1 V, permet de réduire significativement la durée de la phase d'activation. La phase d'activation est ainsi accélérée. Un gain en temps d'un facteur supérieur ou égal à 10 peut être obtenu. Une explication relative à cette amélioration pourrait être la suivante : la réduction des oxydes de Pt initialement présents en surface des nanoparticules de catalyseur nécessite l'application d'une tension inférieure ou égale à 0,3 V, et de préférence voisine de 0,1 V pendant plusieurs minutes. Cette tension est très en deçà des valeurs classiquement retenues pour mettre en œuvre les phénomènes électrochimiques (typiquement 0,5 à 0,7 V). L'application prolongée d'une tension voisine de 0,1 V entre la cathode et l'anode de la pile pourrait également permettre de désorber d'autres polluants, par exemple des polluants tels que des chlorures provenant de la synthèse du catalyseur et/ou des polluants tels que des molécules organiques provenant du procédé de fabrication de l'AME.

Selon un exemple de réalisation, le procédé d'activation comprend une alimentation en air appauvri présentant une fraction molaire d'oxygène de 5,25%, et une application d'une tension d'activation Ve de 0,1 V. Il est appliqué à une pile comprenant un empilement de 6 cellules constituées d'AME commerciaux.

Ces AME comprennent typiquement un catalyseur à base de nanoparticules de Pt supporté sur carbone et une membrane/ionomère conducteur protonique de type perfluorosulfoné. La surface active de la pile est ici de 178 cm².

Les conditions opératoires du procédé d'activation dans cet exemple sont les suivantes :
- pour l'anode : débit d'H2 par cellule à 3,4 g/h (gramme par heure), 80°C, taux d'humidité 80%, pression 1,5 bar,
- pour la cathode : débit d'air appauvri par cellule 123 g/h, 80°C, taux d'humidité 80%, pression 1,5 bar.

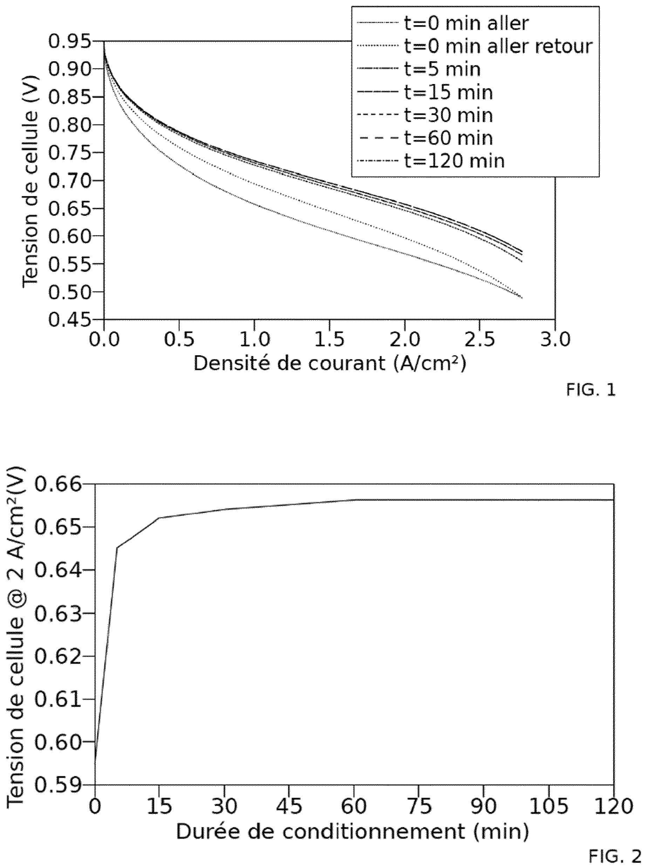

Les performances de la pile ont été évaluées par des mesures de polarisation. La figure 1 présente des courbes de polarisation obtenues après différentes durées d'application du procédé d'activation, notamment pour t = 5 min, t = 15 min, t = 30 min, t = 60 min, t = 120 min. Une stabilisation à 0,65 V pendant 4 min a été effectuée avant chaque mesure.

La figure 2 montre que les performances électrochimiques de la pile se rapprochent très rapidement des performances maximales atteintes pour t ≥ 60 min. En particulier, la différence de tension ΔU (vis-à-vis de la tension nominale à t = 120 min) est de - 4 mV @ 2 A/cm² après seulement 15 minutes d'application du procédé d'activation. Cette différence ΔU est de - 2 mV @ 2 A/cm² après 30 minutes d'application du procédé d'activation. Des mesures d'impédance électrochimiques complémentaires (non illustrées) montrent également que la résistance de polarisation est diminuée après seulement 15 minutes de fonctionnement à 0,1 V sous air appauvri.

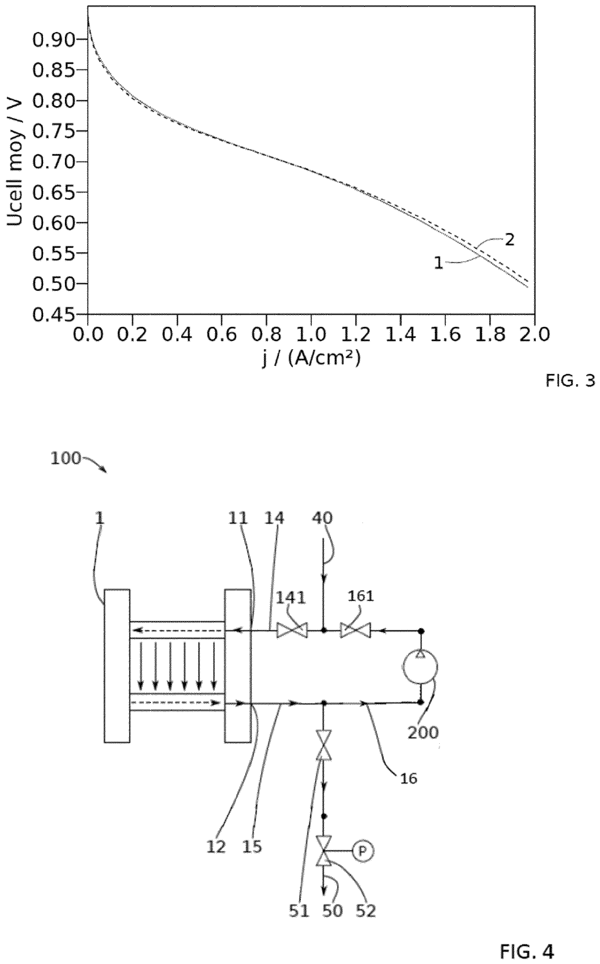

La figure 3 présente un comparatif entre le procédé d'activation selon la présente invention, à 0,1 V sous air appauvri (5,25%), et un procédé standard de fonctionnement et/ou d'activation sous air.

La courbe de polarisation 1 obtenue après mise en œuvre du procédé d'activation selon la présente invention pendant 15 min se superpose quasiment à la courbe de polarisation 2 obtenue après 17h de fonctionnement dans des conditions nominales (H2/air, 1,5 bar, 80°C, taux d'humidité 80%, stoechiométrie 1,5/2 @ 1 A/cm²). La différence de tension ΔU (vis-à-vis de la tension nominale à t = 17 h) est de - 4 mV @ 1 A/cm² et de - 10 mV @ 2 A/cm² après seulement 15 minutes d'application du procédé d'activation.

Il apparaît ainsi clairement que le procédé d'activation selon l'invention est très efficace et permet un gain de temps très significatif par rapport aux procédés d'activation selon l'état de l'art. Il peut avantageusement être mis en œuvre dans le cadre d'un conditionnement initial de la pile, avant toute utilisation en phase de fonctionnement nominale. Il peut également être mis en œuvre, par exemple périodiquement, pour régénérer au moins partiellement la pile, entre des phases de fonctionnement nominales. La durée du procédé d'activation sera dès lors ajustée en conséquence. Typiquement, pour un conditionnement initial de la pile à combustible, la durée de la phase d'activation est comprise entre 2 min et 30 min, de préférence entre 2 min et 20 min et de préférence entre 5 min et 15 min. Pour une régénération de la pile à combustible, la durée de la phase d'activation est comprise entre 2s et 20s.

Le procédé d'activation présente notamment les avantages suivants :
- Un fonctionnement à faible tension de pile, accélérant la réduction des oxydes de Pt présents au démarrage initial de la pile ;
- Une maîtrise de la densité de courant liée à l'appauvrissement en oxygène (obtention du courant limite de transport d'O2) ;
- Un contrôle aisé de la gestion thermique grâce à la limitation de la production de chaleur ;
- Un contrôle aisé de la gestion électrique par une simple charge électrique dissipative (voire directement en court-circuitant la pile) ;
- Une consommation d'hydrogène fortement réduite liée à la diminution du courant de pile sous comburant à faible teneur en O2 et à la plus faible durée d'activation ;
- Une production d'eau favorisée permettant une bonne hydratation du ionomère ;
- Un fonctionnement à fort débit de fluide à la cathode permettant un fonctionnement plus homogène sur toute la surface active.

D'un point de vue pratique, l'appauvrissement en oxygène peut être effectué par simple dilution. Ainsi le fluide d'activation peut être obtenu par dilution du fluide d'alimentation. Une autre solution permettant de diminuer la fraction molaire d'oxygène dans la pile consiste à faire recirculer le fluide dans le circuit cathodique. Le fluide d'activation est alors obtenu à partir du fluide d'alimentation, par recirculation. L'appauvrissement d'oxygène peut être accentué par une diminution de la pression ou une augmentation de la fraction molaire d'autres espèces comme par exemple la vapeur d'eau.

La figure 4 présente un exemple de recirculation cathodique pouvant être appliquée dans le cadre du procédé d'activation selon la présente invention.

Dans cet exemple, la pile comprend un groupe 1 comprenant plusieurs cellules connectées en série. La pile est dimensionnée de façon à ce que la stoechiométrie globale soit supérieure à 1, et comprise de préférence entre 1,2 et 1,3.

Le circuit fluidique de cette pile 100 comprend typiquement un conduit d'alimentation principal 40, une ligne d'alimentation 14, une ligne d'évacuation 15, une ligne de recirculation 16 et un conduit d'évacuation principal 50. Ce circuit fluidique comprend en outre un commutateur d'entrée 141, des commutateurs de sortie 51, 52, un commutateur de recirculation 161. L'assignation des entrées et sortie du groupe peut varier, en fonction des différentes phases de fonctionnement de la pile et du sens de circulation du fluide d'activation.

Comme illustré à la figure 4, lors d'une phase d'activation de la pile, il est possible d'alimenter le circuit fluidique en air « frais » (fluide d'alimentation à 21% d'O2) par le conduit d'alimentation 40, puis d'effectuer au moins en partie une recirculation d'air dans le groupe 1. Les commutateurs d'entrée, de recirculation et de sortie 141, 161, 51, 52 sont ouverts. La pompe de recirculation 200 permet à l'air de circuler dans la ligne de recirculation 16. L'air sortant du groupe 1 par la sortie 12 est avantageusement réinjecté dans le groupe 1 par l'entrée 11 via la ligne de recirculation 16. L'air sortant du groupe 1 est appauvri en oxygène. Le débit d'air dans la ligne d'alimentation 14 est la somme des débits d'air frais et appauvri respectivement dans le conduit d'alimentation 40 et dans la ligne de recirculation 16.

Ce fonctionnement permet d'appauvrir fortement l'air en oxygène et d'abaisser rapidement la tension aux bornes de la cathode du groupe de cellules, tout en transportant l'eau liquide au sein du groupe de façon homogène.

La recirculation permet en effet de diminuer la fraction molaire d'oxygène de l'air alimentant le groupe 1 en dessous de 7%. La recirculation permet également de réinjecter du fluide suffisamment humide en entrée du groupe. Les gradients d'humidité dans les cellules du groupe sont ainsi limités. Cela permet une bonne hydratation des cellules lors de l'activation.

Cette phase d'activation par recirculation peut être assortie d'un niveau de tension minimum et/ou une durée minimum, typiquement Ve = 0,1 V et t = 5 min pour un conditionnement initial. L'alimentation en air frais par le conduit d'alimentation principal 40 peut être puisée, ou maintenue à très faible débit, de façon à conserver suffisamment d'oxygène pour que la stoechiométrie reste supérieure à 1, dans la fenêtre visée. L'évacuation par le conduit d'évacuation principal 50 peut être ajustée en conséquence. La ligne de recirculation 16 est optionnelle. Selon une possibilité, un système externe gère totalement le débit et la dilution en comburant du fluide d'alimentation. Un tel système peut notamment être mis en œuvre pour un conditionnement initial en usine.

La fraction molaire d'oxygène entrant dans le groupe 1 peut ainsi être contrôlée en fixant le courant I dans le groupe, le débit d'air et/ou le taux de recirculation (c'est-à-dire le rapport entre la partie d'air réinjectée et la partie d'air évacuée).

L'utilisation d'une pompe de recirculation 200 permet également une meilleure homogénéisation fluidique entre et au sein des cellules du groupe 1. Cela permet en outre d'éviter une accumulation locale d'eau liquide dans les cellules.

Les paramètres de la phase d'activation décrite ci-dessus peuvent être ajustés et optimisés en fonction d'un niveau de performances à atteindre, par exemple au moins 90% ou 95% des performances nominales de la pile.

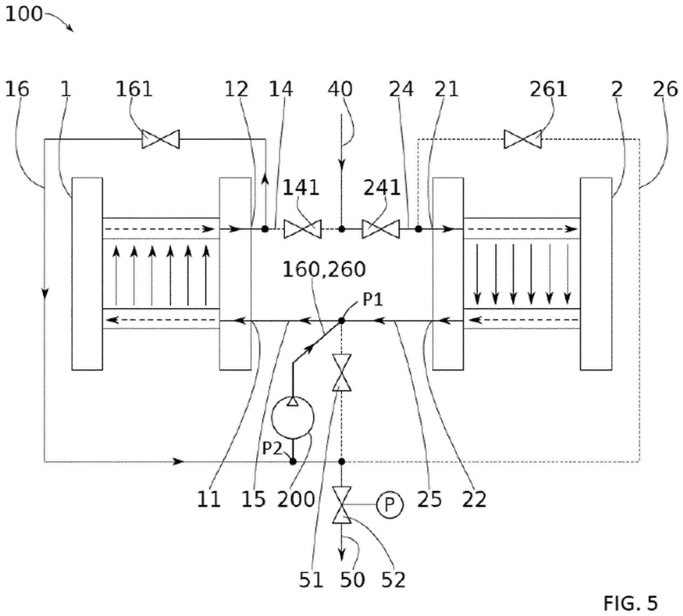

Un deuxième exemple de pile 100 mettant en œuvre un procédé de régénération selon l'invention est illustré à la figure 5. Dans cet exemple, la pile comprend deux groupes 1, 2 connectés via un circuit fluidique.

Le circuit fluidique comprend ici typiquement un conduit d'alimentation principal 40, des lignes d'alimentation 14, 24, des lignes d'évacuation 15, 25, des lignes de recirculation 16, 26 et un conduit d'évacuation principal 50. Ce circuit fluidique comprend en outre des commutateurs d'entrée 141, 241, des commutateurs de sortie 51, 52, des commutateurs de recirculation 161, 261. Les lignes d'évacuation 15, 25 sont de préférence dépourvues de commutateur.

Dans le cas où la pile comprend plusieurs groupes de cellules, lors d'une phase de régénération, un groupe peut être alimenté en série à partir d'au moins un autre groupe. Ainsi, dans l'exemple de la figure 5, le groupe 1 est en cours de régénération et le groupe 2 est en cours de production nominale. Dans cet exemple, l'air arrivant dans la pile et présentant une fraction molaire d'oxygène nominale (typiquement 21%) est amené par le conduit d'alimentation principal 40 à l'entrée 21 du groupe 2 uniquement. Le commutateur d'entrée 141 du groupe 1 est fermé. Le commutateur d'entrée 241 du groupe 2 est ouvert. L'air circule dans la ligne d'alimentation 24 jusqu'à l'entrée 21. Après avoir traversé le groupe 2, l'air sort par la sortie 22 et circule dans la ligne d'évacuation 25 jusqu'à l'entrée 11 du groupe 1. Le commutateur de sortie 51 est fermé. Le groupe 1 est ainsi alimenté par un air appauvri en oxygène provenant de la sortie 22 du groupe 2. Cet air présente par exemple une fraction molaire d'O2 de l'ordre de 11,7% à la sortie 22 du groupe 2. Lors de la régénération du groupe 1, le flux d'air circulant dans le groupe 1 présente ici un sens de circulation inversé par rapport à une phase de fonctionnement nominale, dans laquelle chacun des groupes 1 et 2 sont alimentés par les lignes d'alimentation 14 et 24 respectivement. Cela améliore le brassage au sein du groupe. La régénération est plus efficace.

Pour diminuer encore plus la fraction molaire d'oxygène de l'air alimentant le groupe 1 en phase de régénération, l'air sortant du groupe 1 par la sortie 12 est avantageusement réinjecté en partie dans le groupe 1 par l'entrée 11 via la ligne de recirculation 16, de préférence grâce à une pompe de recirculation 200. Le commutateur de recirculation 161 est ici ouvert, tandis que le commutateur de recirculation 261 est fermé. Une partie de l'air circulant dans la ligne de recirculation 16 est évacué via le conduit d'évacuation principal 50 et le régulateur de pression 52. Dans l'exemple illustré, la ligne de recirculation 16 présente typiquement un embranchement P1 avec les lignes d'évacuation 15, 25, et un embranchement P2 avec le conduit d'évacuation principal 50. La ligne de recirculation 16 comprend ici la section 160 entre la pompe de recirculation 200 et l'embranchement P1.

La recirculation permet de diminuer la fraction molaire en oxygène de l'air (hors vapeur d'eau) alimentant le groupe 1 typiquement en dessous de 7%, voire de 5%. Une telle fraction molaire en oxygène réduite permet de diminuer la tension de fonctionnement de la pile, en condition de régulation en courant de la pile. Cela permet avantageusement de favoriser la réduction rapide des oxydes superficiels Pt-Ox. Cette tension de fonctionnement est de préférence inférieure à 0,3 V, et plus préférentiellement inférieure ou égale à 0,2 V.

La pompe de recirculation 200 est de préférence dimensionnée pour alimenter le ou les seuls groupes concernés par la phase de régénération. Il est ainsi possible d'utiliser une pompe de puissance et/ou de taille réduite. La pompe de recirculation 200 permet en outre de préférence une inversion du sens de circulation de l'air dans le groupe 1.

Avantageusement, le sens de circulation de l'air dans le groupe 1 est inversé lors de la phase de régénération, par rapport au sens de circulation usuel lors de la phase de production nominale. Cela permet un brassage gazeux à l'intérieur des cellules du groupe 1 et une meilleure homogénéisation des fractions molaires en eau et en oxygène à l'intérieur des cellules.

La durée de la phase de régénération est typiquement de l'ordre de quelques secondes. Après régénération du groupe 1, le groupe 2 peut être à son tour régénéré.

L'invention n'est pas limitée aux modes de réalisations précédemment décrits. Toutes les possibilités d'activation, en conditionnement initial ou en régénération, pour une pile comprenant un ou plusieurs groupes, avec ou sans recirculation et/ou inversion de circulation, peuvent être envisagées.

## Revendications

1. Procédé d'activation d'une pile à combustible (100) comprenant une pluralité de cellules électrochimiques en empilement,
la pile à combustible (100) étant destinée à être alimentée, lors d'au moins une phase de fonctionnement nominale, par un fluide d'alimentation présentant un débit nominal et une fraction molaire de comburant nominale,
le procédé comprenant, lors d'une phase d'activation préalable à l'au moins une phase de fonctionnement nominale :
- Une alimentation de la pile à combustible (100) par un fluide d'activation présentant un débit supérieur ou égal à 80% du débit nominal, et une fraction molaire de comburant inférieure ou égale à 50% de la fraction molaire nominale de comburant, le fluide d'activation étant formé à partir du fluide d'alimentation en diminuant la fraction molaire de comburant dudit fluide d'alimentation, par recirculation du fluide d'alimentation au sein de la pile,
- Une application d'une tension d'activation Ve à chaque cellule de la pile à combustible (100), Ve étant inférieure ou égale à 0,3 V,
Ladite phase d'activation présentant une durée comprise entre 2 secondes et 30 minutes.

2. Procédé selon la revendication précédente dans lequel le débit et la fraction molaire de comburant du fluide d'activation, et la tension d'activation Ve sont choisies de sorte que la pile présente une stoechiométrie comprise entre 1,1 et 1,5 lors de la phase d'activation.

3. Procédé selon la revendication précédente dans lequel la stoechiométrie est comprise entre 1,2 et 1,3 lors de la phase d'activation.

4. Procédé selon l'une quelconque des revendications précédentes dans lequel lors de la phase de fonctionnement nominal, une tension de fonctionnement Vf ≥ 0,5 V est appliquée aux cellules de la pile à combustible (100).

5. Procédé selon l'une quelconque des revendications précédentes dans lequel la tension d'activation Ve est inférieure ou égale à 0,2 V.

6. Procédé selon l'une quelconque des revendications précédentes dans lequel la tension d'activation Ve est égale à 0,1 V.

7. Procédé selon l'une quelconque des revendications précédentes dans lequel la phase d'activation est appliquée simultanément à toutes les cellules de la pluralité de cellules électrochimiques de la pile.

8. Procédé selon l'une quelconque des revendications précédentes dans lequel la fraction molaire de comburant du fluide d'activation est comprise entre 5% et 8%.

9. Procédé selon l'une quelconque des revendications précédentes dans lequel la pluralité de cellules électrochimiques de la pile présente une surface réactive totale comprise entre 10 cm² et 800 cm².

10. Procédé selon l'une quelconque des revendications précédentes dans lequel le fluide d'activation présente, lors de la phase d'activation, un sens d'écoulement dans la pile inversé par rapport à un sens d'écoulement du fluide d'alimentation lors de la phase de fonctionnement nominale.

11. Procédé selon l'une quelconque des revendications précédentes dans lequel la phase d'activation est effectuée avant toute phase de fonctionnement nominale, le procédé permettant ainsi de conditionner la pile à combustible (100), la durée de la phase d'activation étant comprise entre 2 minutes et 30 minutes et de préférence entre 5 minutes et 15 minutes.

12. Procédé selon l'une quelconque des revendications 1 à 10 dans lequel la phase d'activation est effectuée entre deux phases de fonctionnement nominales, le procédé permettant ainsi de régénérer la pile à combustible (100), la durée de la phase d'activation étant comprise entre 2 secondes et 20 secondes.

13. Equipement comportant une pile à combustible (100) comprenant une pluralité de cellules électrochimiques en empilement, l'équipement comprenant un système de contrôle-commande configuré pour :
- imposer à la pile à combustible (100) au moins une phase de fonctionnement nominale, au cours de laquelle le système de contrôle-commande contrôle et commande l'alimentation de la pile à combustible (100) par un fluide d'alimentation présentant un débit nominal et une fraction molaire de comburant nominale,
- imposer à la pile à combustible (100) une phase d'activation préalable à l'au moins une phase de fonctionnement nominale, au cours de laquelle le système de contrôle-commande contrôle et commande:
∘ l'alimentation de la pile à combustible (100) par un fluide d'activation présentant un débit supérieur ou égal à 80% du débit nominal, et une fraction molaire de comburant inférieure ou égale à 50% de la fraction molaire nominale de comburant,
∘ l'application d'une tension d'activation Ve aux cellules de la pile à combustible (100), Ve étant inférieure ou égale à 0,3 V,
le système de contrôle-commande étant configuré de sorte que la phase d'activation présente une durée comprise entre 2 secondes et 30 minutes.

14. Equipement selon la revendication précédente dans lequel le système de contrôle-commande est configuré pour contrôler et commander une formation du fluide d'activation par recirculation du fluide d'alimentation au sein de la pile.

15. Utilisation de l'équipement selon l'une quelconque des deux revendications précédentes pour conditionner ou pour régénérer la pile à combustible (100).
